(19) **Europäisches Patentamt / European Patent Office / Office européen des brevets**

(11) **EP 4 694 335 A1**

(12) **EUROPEAN PATENT APPLICATION**
published in accordance with Art. 153(4) EPC

(43) Date of publication:
**11.02.2026  Bulletin 2026/07**

(21) Application number: **24785195.9**

(22) Date of filing: **03.04.2024**

(51) International Patent Classification (IPC):
**H04W 36/00** $^{(2009.01)}$    **H04W 74/00** $^{(2009.01)}$
**H04W 74/04** $^{(2009.01)}$

(52) Cooperative Patent Classification (CPC):
**H04W 36/00; H04W 74/00; H04W 74/04**

(86) International application number:
**PCT/KR2024/004294**

(87) International publication number:
**WO 2024/210490 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.04.2023  KR 20230045588**

(71) Applicant: **LG ELECTRONICS, INC.**
**Seoul 07336 (KR)**

(72) Inventors:
• **GO, Seongwon**
  **Seoul 06772 (KR)**
• **LEE, Youngdae**
  **Seoul 06772 (KR)**
• **KO, Hyunsoo**
  **Seoul 06772 (KR)**
• **KIM, Seonwook**
  **Seoul 06772 (KR)**
• **SHIN, Seokmin**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR TRANSMITTING AND RECEIVING RANDOM ACCESS RESPONSE**

(57)    A method according to an embodiment of the present disclosure comprises the steps of: receiving a DCI; transmitting a PRACH; receiving a PDCCH associated with a RAR; and receiving a PDSCH associated with the RAR. The PRACH is associated with a second cell that is different from the first cell. A CRC of the DCI associated with the PDCCH is scrambled on the basis of an RNTI. The RNTI is characterized by a random access (RA)-RNTI calculated on the basis of information associated with the second cell.

[FIG. 7]

```
              Start

          Receive DCI ──────── S710

        Transmit PRACH ──────── S720

   Receive PDCCH related to RAR ──── S730

   Receive PDSCH related to RAR ──── S740

               End
```

**Description**

[Technical Field]

The present disclosure relates to a method and a device transmitting and receiving a random access response.

[Background Art]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

In an NR operation before Rel-17/18, an RRM L3 measurement was utilized for handover, and based thereon, a handover operation by a higher-layer was performed. In order to reduce latency during the handover, in the Rel-17, an operation of setting an SSB of a neighbor cell to a user equipment (UE) to perform an L1 beam report for an L1 measurement on the neighbor cell has been standardized.

In the Rel-18, a method for performing TA acquisition of a neighbor cell that may be a candidate serving cell for an L1/L2-triggered handover operation and standardization of L1 measurement/report enhancement for the neighbor cell are performed. In particular, RACH transmission may be performed for the TA acquisition of the neighboring cell that may be the candidate serving cell. In this case, the UE may receive a TA command for the neighbor cell through the RAR. At this time, a configuration of an RAR PDSCH for a PDCCH scheduling RAR and the TA command needs to be defined. For example, an RAR Medium Access Control Control Element (MAC CE) includes an uplink grant (UL grant) field and a Temporary C (Cell)-Radio Network Temporary Identifier (RNTI) field. However, when a PRACH is transmitted for the TA acquisition of the neighbor cell, UL transmission is not performed for the neighbor cell, and thus the UL grant may not be required. In addition, a UE that transmits the PRACH for the neighbor cell is a UE that is already given a C-RNTI, and thus the Temporary C-RNTI may not be required either.

At this time, Random Access (RA)-Radio Network Temporary Identifiers (RNTIs) for different random access procedures (different UEs) may collide with each other. For example, an RA-RNTI calculated for a random access procedure related to a candidate cell may be the same as an RA-RNTI calculated for a Random Access procedure related to a serving cell. Therefore, a specific UE (e.g., a UE that transmits a PRACH related to the serving cell or a UE that transmits a PRACH related to the candidate cell) may not properly receive a random access response.

[Disclosure]

[Technical Problem]

As described above, an object of the present disclosure is to propose a method for solving a problem in that RNTIs (e.g., RA-RNTIs) related to a random access procedure collide with each other.

The technical objects of the present disclosure are not limited to the aforementioned technical objects, and other technical objects, which are not mentioned above, will be apparently appreciated by a person having ordinary skill in the art from the following description.

[Technical Solution]

According to an embodiment of the present disclosure, a method performed by a user equipment (UE) in wireless communication system includes: receiving configuration information related to candidate cells; receiving Downlink Control Information (DCI) that is related to an initiation of a random access procedure; transmitting a Physical Random Access Channel (PRACH); receiving a Physical Downlink Control CHannel (PDCCH) related to a Random Access Response (RAR); and receiving a Physical Downlink Shared CHannel (PDSCH) related to the RAR.

The configuration information includes a configuration related to a PRACH for each of the candidate cells.

The PRACH is associated with a second cell that is different from the first cell.

A Cyclic Redundancy Check (CRC) of Downlink Control Information (DCI) related to the PDCCH is scrambled based on a Radio Network Temporary Identifier (RNTI).

The RNTI is a random access (RA)-RNTI calculated based on information associated with the second cell.

The first cell may be a serving cell and the second cell may be one of the candidate cells.

The RA-RNTI may be calculated based on a first value and a second value. The second value may be calculated based on the information related to the second cell.

The information related to the second cell may be a Physical Cell Identity (PCI) related to the second cell.

The information related to the second cell may be a cell index configured for the Physical Cell Identity (PCI) related to the second cell.

The information related to the second cell may be one of cell indices mapped to PCIs related to the candidate cells.

The cell indices may be mapped in ascending order based an order of the PCIs.

The first value may be calculated based on an index related to the PRACH. The index related to the PRACH may include at least one of i) a first index related to a symbol, ii) a second index related to a slot, iii) a third index related to a frequency domain, and/or iv) a fourth index related to an uplink carrier.

The first value may be an RA-RNTI related to the first cell.

The information related to the second cell may be an offset for a symbol index for calculating the RA-RNTI.

The DCI may include i) a Physical Cell Identity (PCI) related to the second cell and/or ii) a cell index related to the RA-RNTI.

The PDCCH may be received based on i) a Type 1 Common Search Space (CSS) set configured in the first cell or ii) a Type 1 PDCCH CSS set configured in the second cell.

A user equipment (UE) according to another embodiment of the present disclosure comprises one or more transceivers, one or more processors, and one or more memories connected to the one or more processors and configured to store instructions.

The instructions, based on being executed by the one or more processors, configure the one or more processors to perform all steps of any one of the methods.

A device according to another embodiment of the present disclosure comprises one or more memories and one or more processors operably connected to the one or more memories.

The one or more memories are configured to store instructions based on being executed by the one or more processors, and the instructions are configured to allow the one or more processors to perform all steps of any one of the methods.

One or more non-transitory computer readable mediums according to another embodiment of the present disclosure stores instructions. The instructions executable by one or more processors are configured to allow the one or more processors to perform all steps of any one of the methods.

According to still yet another embodiment of the present disclosure, a method performed by a base station in a wireless communication system includes: transmitting configuration information related to candidate cells; transmitting Downlink Control Information (DCI) that is related to an initiation of a random access procedure; receiving a Physical Random Access CHannel (PRACH); transmitting a Physical Downlink Control Channel (PDCCH) related to a Random Access Response (RAR); and transmitting a Physical Downlink Shared Channel (PDSCH) related to the RAR.

The configuration information includes a configuration related to a PRACH for each of the candidate cells.

The PRACH is associated with a second cell that is different from the first cell.

A Cyclic Redundancy Check (CRC) of Downlink Control Information (DCI) related to the PDCCH is scrambled based on a Radio Network Temporary Identifier (RNTI).

The RNTI is a random access (RA)-RNTI calculated based on information associated with the second cell.

A base station operating in a wireless communication according to another embodiment of the present disclosure comprises one or more transceivers, one or more processors, and one or more memories connected to the one or more processors and configured to store instructions.

The instructions, based on being executed by the one or more processors, are configured to allow the one or more processors to perform all steps of any one of the methods.

[Advantageous Effects]

A calculation scheme of an RA-RNTI according to an existing defined scheme does not vary depending on whether a random access procedure is related to a serving cell or a candidate cell. Therefore, even when a target cell (serving cell or candidate cell) is different, the RA-RNTI may be calculated to have a same value.

According to an embodiment of the present disclosure, an RNTI related to a random access response is calculated based on information related to a second cell (e.g., PCI, C_id, or s_id offset).

Therefore, the RNTI for the random access procedure related to the second cell is calculated to be a different value from the RNTI of the random access procedure related to the first cell, so that collision of RNTIs related to different cells may be avoided.

In addition, the calculated RNTIs are clearly distinguished for each cell, so that an RAR related to a cell (e.g., a candidate cell) on which a UE performs the random access procedure may be stably received. More specifically, a Cyclic Redundancy Check (CRC) related to DCI detected by the UE is scrambled by the RNTI distinguished for each cell, so that the UE may clearly determine whether the detected DCI is related to the second cell that transmits a PRACH.

Additionally, since the random access response is transmitted and received based on a cell-specifically calculated RNTI, reliability of a random access procedure performed for each of a plurality of cells (serving cells and candidate cells) may be ensured.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[Description of Drawings]

FIG. 1 illustrates MAC RAR according to an embodiment of the present disclosure.

FIG. 2 illustrates a timing advance command MAC CE according to an embodiment of the present disclosure.

FIG. 3 illustrates a procedure related to an LTM to which a method according to embodiment of the present disclosure may be applied.

FIG. 4 illustrates an RNTI according to an embodiment of the present disclosure.

FIG. 5 illustrates an RNTI according to another embodiment of the present disclosure.

FIG. 6 illustrates an RNTI according to yet another embodiment of the present disclosure.

FIG. 7 is a flowchart illustrating a method performed by a UE according to an embodiment of the present disclosure.

FIG. 8 is a flowchart illustrating a method performed by a base station according to another embodiment of the present disclosure.

FIG. 9 illustrates configuration of a first device and a second device according to an embodiment of the present disclosure.

[Mode for Disclosure]

Hereinafter, preferred embodiments of the disclosure are described in detail with reference to the accompanying drawings. The following detailed description taken in conjunction with the accompanying drawings is intended for describing embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

Timing Advance (TA) related procedure

Uplink frame number i for transmission from a user equipment (UE) shall start $T_{TA}$ before the start of the corresponding downlink frame at the UE.

Uplink timing (e.g., uplink frame) related to $T_{TA}$ may be based on Table 1 below.

[Table 1]

| |
|---|
| Uplink frame number $i$ for transmission from the UE shall start $$T_{\mathrm{TA}} = \left(N_{\mathrm{TA}} + N_{\mathrm{TA,offset}} + N_{\mathrm{TA,adj}}^{\mathrm{common}} + N_{\mathrm{TA,adj}}^{\mathrm{UE}}\right)T_{\mathrm{c}}$$ before the start of the corresponding downlink frame at the UE where <br> - $N_{\mathrm{TA}}$ and $N_{\mathrm{TA,offset}}$ are given by clause 4.2 of [5, TS 38.213], except for msgA transmission on PUSCH where $N_{\mathrm{TA}}$ = 0 shall be used; <br> - $N_{\mathrm{TA,adj}}^{\mathrm{common}}$ given by clause 4.2 of [5, TS 38.213] is derived from the higher-layer parameters *TACommon, TACommonDrift,* and *TACommonDriftVariation* if configured, otherwise $N_{\mathrm{TA,adj}}^{\mathrm{common}} = 0$ ; <br> - $N_{\mathrm{TA,adj}}^{\mathrm{UE}}$ given by clause 4.2 of [5, TS 38.213] is computed by the UE based on UE position and serving-satellite-ephemeris-related higher-layers parameters if configured, otherwise $N_{\mathrm{TA,adj}}^{\mathrm{UE}} = 0$ . |

In Table 1, $T_{TA}$ may be calculated/determined based on $N_{TA}$ and $N_{TA,offset}$. $N_{TA}$ and $N_{TA,offset}$ may be configured/applied as follows.

$N_{TA}$: 1) configuring through a random access response (RAR) and 2) configuring through timing advance command (MAC-CE)

$N_{TA,offset}$: 1) configuring a specific value per serving cell and 2) applying a pre-defined value based on duplex mode/FR suitably to the serving cell

A method of configuring/applying $N_{TA,offset}$ and $N_{TA}$ described above is described in detail below.

$N_{TA,offset}$

Case 1) Method of configuring a specific value per serving cell

For example, a UE may receive configuration information (e.g., ServingCellConfigCommon Information) including information on NTA,offset from a base station. The configuration information may be received based on RRC signaling. Table 2 below shows the configuration information.

【Table 2】

| |
|---|
| – *ServingCellConfigCommon* <br> The IE *ServingCellConfigCommon* is used to configure cell specific parameters of a UE's serving cell. The IE |

contains parameters which a UE would typically acquire from SSB, MIB or SIBs when accessing the cell from IDLE. With this IE, the network provides this information in dedicated signalling when configuring a UE with a SCells or with an additional cell group (SCG). It also provides it for SpCells (MCG and SCG) upon reconfiguration with sync.

**ServingCellConfigCommon information element**

```
-- ASN1START
-- TAG-SERVINGCELLCONFIGCOMMON-START

ServingCellConfigCommon ::=          SEQUENCE {
    physCellId                                          PhysCellId
OPTIONAL,    -- Cond HOAndServCellAdd,
        downlinkConfigCommon                           DownlinkConfigCommon
OPTIONAL,    -- Cond HOAndServCellAdd
        uplinkConfigCommon                             UplinkConfigCommon
OPTIONAL,    -- Need M
        supplementaryUplinkConfig                      UplinkConfigCommon
OPTIONAL,    -- Need S
        n-TimingAdvanceOffset              ENUMERATED  {  n0,  n25600,  n39936  }
OPTIONAL,    -- Need S
                                    (...)
}
-- TAG-SERVINGCELLCONFIGCOMMON-STOP
-- ASN1STOP
```

**n-TimingAdvanceOffset**

The N_TA-Offset to be applied for all uplink transmissions on this serving cell. If the field is absent, the UE applies the value defined for the duplex mode and frequency range of this serving cell. See TS 38.133 [14], table 7.1.2-2.

Case 2) Method of applying a pre-defined value based on duplex mode/FR suitably to serving cell

For example, the UE may apply a pre-defined value of $N_{TA,offset}$ based on duplex mode (TDD/FDD)/FR suitably to the serving cell. Table 3 below shows the value of $N_{TA,offset}$.

【Table 3】

| Table 7.1.2-2: The Value of $N_{TA\,offset}$ | |
|---|---|
| **Frequency range and band of cell used for uplink transmission** | $N_{TA\,offset}$ **(Unit: Tc)** |
| FR1 FDD or TDD band with neither E-UTRA–NR nor NB-IoT–NR coexistence case | 25600 (Note 1) |
| FR1 FDD band with E-UTRA–NR and/or NB-IoT–NR coexistence case | 0 (Note 1) |
| FR1 TDD band with E-UTRA–NR and/or NB-IoT–NR coexistence case | 39936 (Note 1) |
| FR2 | 13792 |

> [1] Note 1: The UE identifies $N_{\text{TA offset}}$ based on the information n-TimingAdvanceOffset as specified in TS 38.331 [2]. If UE is not provided with the information n-TimingAdvanceOffset, the default value of $N_{\text{TA offset}}$ is set as 25600 for FR1 band. In case of multiple UL carriers in the same TAG, UE expects that the same value of n-TimingAdvanceOffset is provided for all the UL carriers according to clause 4.2 in TS 38.213 [3] and the value 39936 of $N_{\text{TA offset}}$ can also be provided for a FDD serving cell.
>
> [2] Note 2: Void

$N_{TA}$

Case 1) Method of configuring through a random access response (RAR)

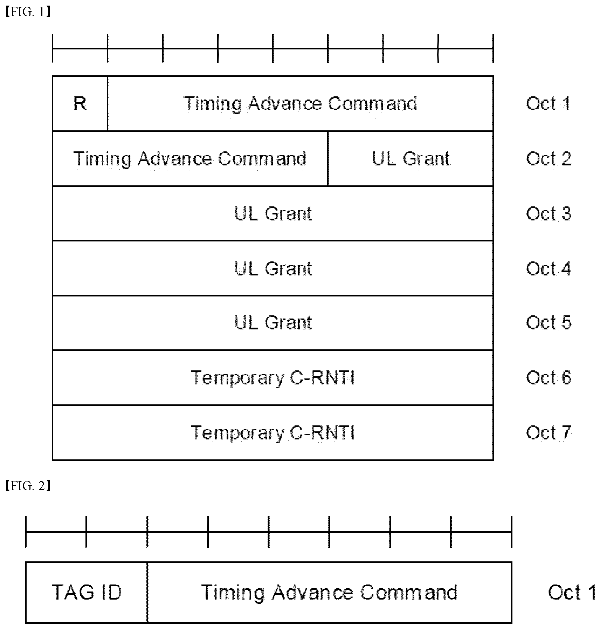

For example, in a random access procedure (e.g., 2-step RACH procedure or 4-step RACH procedure), a UE may receive an RAR from a base station. $N_{TA}$ may be determined/configured based on the RAR. Specifically, the RAR may include a timing advance command. The timing advance command indicates an index value (e.g., index value TA) related to timing adjustment. $N_{TA}$ may be determined based on the index value (see Table 5 below). The RAR may be based on MAC RAR. This is described below with reference to FIG. 1.

FIG. 1 illustrates MAC RAR according to an embodiment of the present disclosure.

Referring to FIG. 1, MAC RAR may include Reserved bit (R), Timing Advance Command, UL Grant, and Temporary C-RNTI. Table 4 below shows MAC payload of the MAC RAR.

[Table 4]

| 6.2.3 MAC payload for Random Access Response |
| --- |
| The MAC RAR is of fixed size as depicted in Figure 6.2.3-1, and consists of the following fields:<br><br>- R: Reserved bit, set to 0;<br><br>- TI: If two TAGs are configured for the Serving Cell in which the Random Access procedure is being performed, this field indicates one of the two TAGs to which the Timing Advance Command is applied. The field set to 0 indicates the first TAG ID and the field set to 1 indicates the second TAG ID. If two TAGs are not configured for the Serving Cell in which the Random Access procedure is being performed, the R bit is present instead;<br><br>- Timing Advance Command: The Timing Advance Command field indicates the index value $T_A$ used to control the amount of timing adjustment that the MAC entity has to apply in TS 38.213 [6]. The size of the Timing Advance Command field is 12 bits;<br><br>- UL Grant: The Uplink Grant field indicates the resources to be used on the uplink in TS 38.213 [6]. The size of the UL Grant field is 27 bits;<br><br>- Temporary C-RNTI: The Temporary C-RNTI field indicates the temporary identity that is used by the MAC entity during Random Access. The size of the Temporary C-RNTI field is 16 bits. The MAC RAR is octet aligned. |

Table 5 below shows transmission timing adjustments based on the timing advance command.

[Table 5]

| 4.2 Transmission timing adjustments |
| --- |
| A UE can be provided a value $N_{\text{TA,offset}}$ of a timing advance offset for a serving cell by *n-TimingAdvanceOffset* for the serving cell. If for a serving cell the UE is provided two *coresetPoolIndex values 0 and 1 for first and second CORESETs, or is not provided coresetPoolIndex value for first CORESETs and is provided coresetPoolIndex value of 1 for second CORESETs, the UE can be provided first and second* $N_{\text{TA,offset}}$ *values by n-TimingAdvanceOffset* and *n-TimingAdvanceOffset2* for transmissions with TCI states |

(continued)

associated with the first and second CORESETs, respectively. A UE can be *provided a second* $N_{\text{TA,offset}}$ value for transmissions with spatial domain filters corresponding to TCI states associated with *physCellId* different from *physCellId* for the serving cell in addition to a first $N_{\text{TA,offset}}$ value for transmissions with spatial domain filters corresponding to TCI states associated with *physCellId* for the serving cell. The *first and second* $N_{\text{TA,offset}}$ values correspond to first and second TAGs [11, TS 38.321] having an association indicated by *tag-Id-ptr* with first and second joint TCI states provided by *dl-OrJointTCI-StateList* or first and second UL TCI states provided by *ul-TCI-State-List*. If the UE is not provided *n-TimingAdvanceOffset* for a serving cell, the UE determines a default value $N_{\text{TA,offset}}$ of the timing advance offset for the serving cell as described in [10, TS 38.133].

If a UE is configured with two UL carriers for a serving cell, a same timing advance offset value $N_{\text{TA,offset}}$ applies to both carriers for transmissions on the serving cell that are associated with a same TAG. The UE does not expect to apply two $N_{\text{TA,offset}}$ values for transmissions on the SUL carrier.

Upon reception of a timing advance command for a TAG. the UE adjusts uplink timing for PUSCH/SRS/PUCCH transmission on all the serving cells in the TAG based on a value $N_{\text{TA,offset}}$ that the UE expects to be same for all the serving cells in the TAG and based on the received timing advance command where the uplink timing for PUSCH/SRS/PUCCH transmissions is the same for all the serving cells in the TAG. For a band with synchronous contiguous intra-band EN-DC in a band combination with non-applicable maximum transmit timing difference requirements as described in Note 1 of Table 7.5.3-1 of [10, TS 38.133], if the UE indicates *ul-TimingAlignmentEUTRA-NR* as 'required' and **uplink transmission** timing based on timing adjustment indication for a TAG from MCG and a TAG from SCG are determined to be different by the UE, the UE adjusts the transmission timing for PUSCH/SRS/PUCCH transmission on all serving cells part of the band with the synchronous contiguous intra-band EN-DC based on timing adjustment indication for a TAG from a serving cell

in MCG in the band. The UE is not expected to transmit a PUSCH/SRS/PUCCH in one CG when the PUSCH/SRS/PUCCH is overlapping in time, even partially, with random access preamble transmitted in another CG.

For a SCS of $2^{\mu} \cdot \mathbf{15}$ kHz, the timing advance command for a TAG indicates the change of the uplink timing relative to the current uplink timing for the TAG in multiples of $\mathbf{16} \cdot \mathbf{64} \cdot T_c/2^{\mu}$. The start timing of the random access preamble is described in [4, TS 38.211].

A timing advance command [11, TS 38.321] in case of random access response or in an absolute timing advance command MAC CE or in a cell switch command, $\mathbf{T_A}$, for a TAG indicates $N_{\text{TA}}$ values by index values of $T_A = 0, 1, 2, ..., 3846$, where an amount of the time alignment for the TAG with SCS of $2^{\mu} \cdot \mathbf{15}$ kHz is $N_{\text{TA}} = T_A \cdot \mathbf{16} \cdot \mathbf{64}/2^{\mu}$. $N_{\text{TA}}$ is defined in [4, TS 38.211] and is relative to the SCS of the first uplink transmission from the UE after the reception of the random access response or absolute timing advance command MAC CE or the cell switch command.

In other cases, a timing advance command [11, TS 38.321], $T_A$, for a TAG indicates adjustment of a current $N_{\text{TA}}$ value, $N_{\text{TA\_old}}$, to the new $N_{\text{TA}}$ value, $N_{\text{TA\_new}}$, by index values of $T_A = 0, 1, 2,..., 63$, where for a SCS of $2^{\mu} \cdot 15$ kHz, $N_{\text{TA\_new}} = N_{\text{TA\_old}} + (T_A\text{-}31) \cdot \mathbf{16} \cdot 64/2^{\mu}$.

If a UE has multiple active UL BWPs, as described in clause 12, in a same TAG, including UL BWPs in two UL carriers of a serving cell, the timing advance command value is relative to the largest SCS of the multiple

active UL BWPs. The applicable $N_{\text{TA\_new}}$ value for an UL BWP with lower SCS may be rounded to align with the timing advance granularity for the UL BWP with the lower SCS while satisfying the timing advance accuracy requirements in [10, TS 38.133].

Adjustment of an $N_{\text{TA}}$ value by a positive or a negative amount indicates advancing or delaying the uplink transmission timing for the TAG by a corresponding amount, respectively.

For a timing advance command received on uplink slot n and for a transmission other than a PUSCH scheduled by a RAR UL grant or a fallbackRAR UL grant as described in clause 8.2A or 8.3, or a PUCCH with HARQ-ACK information in response to a successRAR as described in clause 8.2A, the corresponding adjustment of the uplink transmission timing applies from the beginning of uplink slot n + $k$ + 1+$2^{\mu} \cdot K_{\text{offset}}$ where

$$k = \left\lceil N_{\text{slot}}^{\text{subframe},\mu} \cdot \left(N_{\text{T,1}} + N_{\text{T,2}} + N_{\text{TA,max}} + 0.5\right)/T_{\text{sf}} \right\rceil, N_{\text{T,1}}$$ is a time duration in msec of $N_1$ symbols corresponding to a PDSCH processing time for UE processing capability 1 when additional PDSCH DM-RS is configured, $N_{\text{T,2}}$ is a time duration in msec of $N_2$ symbols corresponding to a PUSCH preparation time for UE processing capability 1[6, TS 38.214], $N_{\text{TA,max}}$ is the maximum timing advance value in msec that can be provided by a TA command field of 12 bits, $N_{\text{slot}}^{\text{subframe},\mu}$ is the number of slots per subframe, $T_{\text{gf}}$ is the subframe duration of 1 msec, and $K_{\text{offset}} = K_{\text{cell,offset}} - K_{\text{UE,Offset}}$, where $K_{\text{cell,offset}}$ is provided by

(continued)

| |
|---|
| *cellSpecificKoffset* and $K_{UE,offset}$ is provided by a Differential Koffset MAC CE command [11, TS 38.321]; otherwise, if not respectively provided, $K_{cell,offset}$ = 0 or $K_{UE,offset}$ = 0. $N_1$ and $N_2$ are determined with respect to the minimum SCS among the SCSs of all configured UL BWPs for all uplink carriers in the TAG and of all configured DL BWPs for the corresponding downlink carriers. For $\mu$ = 0, the UE assumes $N_{1,0}$ = 14 [6, TS 38.214]. Slot n and $N_{slot}^{subframe,\mu}$ are determined with respect to the minimum SCS among the SCSs of all configured UL BWPs for all uplink carriers in the TAG. $N_{TA,max}$ is determined with respect to the minimum SCS among the SCSs of all configured UL BWPs for all uplink carriers in the TAG and for all configured initial UL BWPs provided by *initialUplinkBWP*. The uplink slot $n$ is the last slot among uplink slot(s) overlapping with the slot(s) of PDSCH reception assuming $T_{TA}$ = 0, where the PDSCH provides the timing advance command and $T_{TA}$ is defined in [4, TS 38.211]. |
| If a UE changes an active UL BWP between a time of a timing advance command reception and a time of applying a corresponding adjustment for the uplink transmission timing, the UE determines the timing advance command value based on the SCS of the new active UL BWP. If the UE changes an active UL BWP after applying an adjustment for the uplink transmission timing, the UE assumes a same absolute timing advance command value before and after the active UL BWP change. |
| If the received downlink timing changes and is not compensated or is only partly compensated by the uplink timing adjustment without timing advance command as described in [10, TS 38.133], the UE changes $N_{TA}$ accordingly. If a UE operates with two TAGs on an active UL BWP of a serving cell, the UE expects that a difference between a first downlink timing associated with a first TAG and a second downlink timing associated with a second TAG is not larger than the CP length for the active UL BWP unless the UE indicates *larger-thanCP-capability*. If a UE indicates *XYZ_capability,* is provided *SRS-autonomousTAupdate* [10, TS 38.133], |
| and transmits SRS based on a configuration by *SRS-PosResourceSet* in *SRS-PosRRC-InactiveConfig-ValidityArea* in RRC_INACTIVE state, the UE may autonomously update $N_{TA}$ at cell reselection; else, if the UE is not provided *SRS-autonomousTAupdate,* the UE maintains the $N_{TA}$ of a last serving cell prior to the release of a dedicated RRC connection [11, TS 38.321]. |
| For operation with single TAG on a serving cell, if two adjacent slots overlap due to a TA command, the latter slot is reduced in duration relative to the former slot. The UE does not change $N_{TA}$ during an actual transmission time window for a PUSCH or a PUCCH transmission [6, TS 38.214]. If the UE is not provided enableSTx2PofMDCI and operates with two TAGs on a serving cell, the UE does not expect transmissions associated with different TAGs to overlap unless the UE indicates XYZ; if the UE indicates XYZ, the UE reduces in duration a latter transmission using a first TAG to avoid |
| overlapping with a former transmission using a second TAG. |

Case 2) Method of configuring through timing advance command (MAC-CE)

For example, NTA may be determined/configured based on MAC-CE. Specifically, NTA may be determined based on timing advance command MAC CE. The timing advance command MAC CE may include a timing advance command. Since the determination of NTA based on the timing advance command is the same as what was described in the Case 1, duplicate descriptions are omitted (see Table 5). The timing advance command MAC CE is described below with reference to FIG. 2.

FIG. 2 illustrates timing advance command MAC CE according to an embodiment of the present disclosure.

Referring to FIG. 2, timing advance command MAC CE may include a TAG ID and a timing advance command. Table 6 below shows payload of the timing advance command MAC CE.

[Table 6]

| |
|---|
| 6.1.3.4 Timing Advance Command MAC CE |
| The Timing Advance Command MAC CE is identified by MAC subheader with LCID as specified in Table 6.2.1-1. It has a fixed size and consists of a single octet defined as follows (Figure 6.1.3.4-1): |
| - TAG Identity (TAG ID): This field indicates the TAG Identity of the addressed TAG. The TAG containing the SpCell has the TAG Identity 0. The length of the field is 2 bits; |
| - Timing Advance Command: This field indicates the index value $T_A$ (0, 1, 2... 63) used to control the amount of timing adjustment that MAC entity has to apply (as specified in TS 38.213 [6]). The length of the field is 6 bits. |
| 6.1.3.4a Absolute Timing Advance Command MAC CE |

(continued)

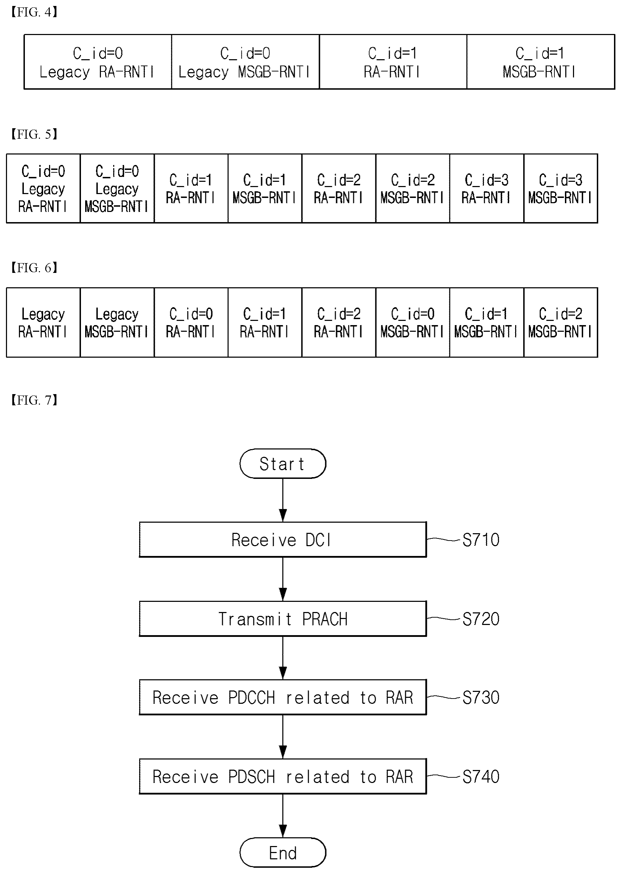

> The Absolute Timing Advance Command MAC CE is identified by MAC subheader with eLCID as specified in Table 6.2.1-1b.
>
> It has a fixed size and consists of two octets defined as follows (Figure 6.1.3.4a-1):
>
> - Timing Advance Command: This field indicates the index value TA used to control the amount of timing adjustment that the MAC entity has to apply in TS 38.213 [6]. The size of the field is 12 bits;
>
> - TI: If two TAGs are configured for SpCell, this field indicates one of the two TAGs to which the Timing Advance Command is applied. The field set to 0 indicates the first TAG ID and the field set to 1 indicates the second TAG ID. If two TAGs are not configured for SpCell, the R bit is present instead;
>
> - R: Reserved bit, set to 0.

Timing Advance Group (TAG)

A timing advance group (TAG) refers to a group of serving cells that use the same timing advance value. Table 7 below shows definition of the TAG and configuration information related to the TAG.

【Table 7】

**Timing Advance Group**: A group of Serving Cells that is configured by RRC and that, for the cells with a UL configured, using the same timing reference cell and the same Timing Advance value. A Timing Advance Group containing the SpCell of a MAC entity is referred to as Primary Timing Advance Group (PTAG), whereas the term Secondary Timing Advance Group (STAG) refers to other TAGs.

*TAG-Config*

The IE *TAG-Config* is used to configure parameters for a time-alignment group.

<p align="center">***TAG-Config* information element**</p>

-- ASN1START

-- TAG-TAG-CONFIG-START


TAG-Config ::=                SEQUENCE {
        tag-ToReleaseList                        SEQUENCE (SIZE (1..maxNrofTAGs)) OF TAG-Id
OPTIONAL,    -- Need N
        tag-ToAddModList                        SEQUENCE (SIZE (1..maxNrofTAGs)) OF TAG
OPTIONAL      -- Need N
}


TAG ::=                SEQUENCE {
        tag-Id                TAG-Id,
        timeAlignmentTimer                TimeAlignmentTimer,

        ...

}


TAG-Id ::=                INTEGER (0..maxNrofTAGs-1)

| ***tag-Id*** |
| --- |
| Indicates the TAG of the SpCell or an SCell, see TS 38.321 [3]. Uniquely identifies the TAG within the scope of a Cell Group (i.e. MCG or SCG). |
| ***timeAlignmentTimer*** |
| The timeAlignmentTimer for TAG with ID tag-Id, as specified in TS 38.321 [3]. |
| **maxNrofTAGs**        INTEGER ::= 4 -- Maximum number of Timing Advance Groups |


–        *CellGroupConfig*

The *CellGroupConfig* IE is used to configure a master cell group (MCG) or secondary cell group (SCG). A cell group comprises of one MAC entity, a set of logical channels with associated RLC entities and of a primary cell (SpCell) and one or more secondary cells (SCells).

<p align="center">***CellGroupConfig* information element**</p>

-- ASN1START

-- TAG-CELLGROUPCONFIG-START

-- Configuration of one Cell-Group:

CellGroupConfig ::=                SEQUENCE {


cellGroupId                CellGroupId,
        rlc-BearerToAddModList                        SEQUENCE (SIZE(1..maxLC-ID)) OF RLC-
BearerConfig                OPTIONAL,    -- Need N
        rlc-BearerToReleaseList                        SEQUENCE (SIZE(1..maxLC-ID)) OF

```
LogicalChannelIdentity                    OPTIONAL,      -- Need N
        mac-CellGroupConfig                                            MAC-CellGroupConfig
OPTIONAL,      -- Need M
        physicalCellGroupConfig                                        PhysicalCellGroupConfig
OPTIONAL,      -- Need M
        spCellConfig                                                   SpCellConfig
OPTIONAL,      -- Need M
        sCellToAddModList                         SEQUENCE (SIZE (1..maxNrofSCells)) OF
SCellConfig                               OPTIONAL,      -- Need N
        sCellToReleaseList                        SEQUENCE (SIZE (1..maxNrofSCells)) OF
SCellIndex                                OPTIONAL,      -- Need N
                                          (...)
```

**MAC-CellGroupConfig**

The IE MAC-CellGroupConfig is used to configure MAC parameters for a cell group, including DRX.

*MAC-CellGroupConfig information element*

-- ASN1START

-- TAG-MAC-CELLGROUPCONFIG-START

```
MAC-CellGroupConfig ::=                    SEQUENCE {
        drx-Config                                            SetupRelease  {  DRX-Config  }
OPTIONAL,     -- Need M
        schedulingRequestConfig                               SchedulingRequestConfig
OPTIONAL,     -- Need M
        bsr-Config                                            BSR-Config
OPTIONAL,     -- Need M
        tag-Config                                            TAG-Config
OPTIONAL,     -- Need M
        phr-Config                                            SetupRelease  {  PHR-Config  }
OPTIONAL,     -- Need M
        skipUplinkTxDynamic                       BOOLEAN,
                                          (...)
```

**CellGroupId**

The IE CellGroupId is used to identify a cell group. Value 0 identifies the master cell group. Other values identify secondary cell groups. In this version of the specification only values 0 and 1 are supported.

*CellGroupId information element*

**-- ASN1START**

```
-- TAG-CELLGROUPID-START
CellGroupId ::=                            INTEGER (0.. maxSecondaryCellGroups)
-- TAG-CELLGROUPID-STOP
-- ASN1STOP
    maxSecondaryCellGroups INTEGER ::= 3
```

Procedure

Uplink time alignment may be performed based on Table 8 below.

[Table 8]

5.2 Maintenance of Uplink Time Alignment

RRC configures the following parameters for the maintenance of UL time alignment:

- *timeAlignmentTimer* (per TAG) which controls how long the MAC entity considers the Serving Cells belonging to the associated TAG to be uplink time aligned;

- *inactivePosSRS-TimeAlignmentTimer* which controls how long the MAC entity considers the Positioning SRS transmission in RRC _INACTIVE in clause 5.26 to be uplink time aligned;

- *cg-SDT-TimeAlignmentTimer* which controls how long the MAC entity considers the uplink transmission for CG-SDT to be uplink time aligned.

The MAC entity shall:

1> when a Timing Advance Command MAC CE is received, and if an $N_{TA}$ (as defined in TS 38.211 [8]) has been maintained with the indicated TAG:

2> apply the Timing Advance Command for the indicated TAG;

2> if there is ongoing Positioning SRS Transmission in RRC_INACTIVE as in clause 5.26:

3> start or restart the *inactivePosSRS-TimeAlignmentTimer* associated with the indicated TAG.

2> if CG-SDT procedure triggered as in clause 5.27 is ongoing:

3> start or restart the *cg-SDT-TimeAlignmentTimer* associated with the indicated TAG.

2> else:

3> start or restart the *timeAlignmentTimer* associated with the indicated TAG.

1> when a Timing Advance Command is received in a Random Access Response message for a Serving

Cell belonging to a TAG or in a MSGB for an SpCell:

2> if the Random Access Preamble was not selected by the MAC entity among the contention-based Random Access Preamble:

3> apply the Timing Advance Command for this TAG;

3> start or restart the *timeAlignmentTimer* associated with this TAG.

2> else if the *timeAlignmentTimer* associated with this TAG is not running:

3> apply the Timing Advance Command for this TAG;

3> start the *timeAlignmentTimer* associated with this TAG;

3> when the Contention Resolution is considered not successful as described in clause 5.1.5; or

3> when the Contention Resolution is considered successful for SI request as described in clause 5.1.5, after transmitting HARQ feedback for MAC PDU including UE Contention Resolution Identity MAC CE:

4> stop *timeAlignmentTimer* associated with this TAG.

3> when the Contention Resolution is considered not successful as described in clause 5.1.5:

4> if CG-SDT procedure triggered as in clause 5.27 is ongoing:

5> set the $N_{TA}$ value to the value before applying the received Timing Advance Command as in TS 38.211 [8].

3> when the Contention Resolution is considered successful for Random Access procedure while the CG-SDT procedure is ongoing:

4> stop *timeAlignmentTimer* associated with this TAG;

4> start or restart the *cg-SDT-TimeAlignmentTimer* associated with this TAG.

---

3> when the Contention Resolution is considered successful for Random Access procedure while SRS transmission in RRC_INACTIVE is ongoing:

4> start or restart the *inactivePosSRS-TimeAlignmentTimer* associated with this TAG.

2> else:

3> ignore the received Timing Advance Command.

1> when an Absolute Timing Advance Command is received in response to a MSGA transmission including C-RNTI MAC CE as specified in clause 5.1.4a:

2> apply the Timing Advance Command for PTAG;

2> if there is ongoing Positioning SRS Transmission in RRC _INACTIVE as in clause 5.26:

3> start or restart the *inactivePosSRS-TimeAlignmentTimer* associated with the indicated TAG.

(continued)

2> if CG-SDT procedure is ongoing:

3> start or restart the *cg-SDT-TimeAlignmentTimer* associated with PTAG.

2> else:

3> start or restart the *timeAlignmentTimer* associated with PTAG.

1> when the indication is received from upper layer for stopping the *inactivePosSRS-TimeAlignmentTimer:*

2> stop the *inactivePosSRS-TimeAlignmentTimer.*

1> when the indication is received from upper layer for starting the *inactivePosSRS-TimeAlignmentTimer:*

2> start or restart the *inactivePosSRS-TimeAlignmentTimer.*

1> when instruction from the upper layer has been received for starting the *cg-SDT-TimeAlignmentTimer:*

2> start the *cg-SDT-TimeAlignmentTimer.*

1> when instruction from the upper layer has been received for stopping the *cg-SDT-TimeAlignmentTimer:*

2> consider the *cg-SDT-TimeAlignmentTimer* as expired.

1> when instruction from the upper layer has been received for starting the *TimeAlignmentTimer* associated with PTAG:

2> start the *TimeAlignmentTimer* associated with PTAG.

1> when a *timeAlignmentTimer* expires:

2> if the *timeAlignmentTimer* is associated with the PTAG:

3> flush all HARQ buffers for all Serving Cells;

3> notify RRC to release PUCCH for all Serving Cells, if configured;

3> notify RRC to release SRS for all Serving Cells, if configured;

3> clear any configured downlink assignments and configured uplink grants;

3> clear any PUSCH resource for semi-persistent CSI reporting;

3> consider all running *timeAlignmentTimers* as expired;

3> maintain $N_{TA}$ (defined in TS 38.211 [8]) of all TAGs.

2> else if the *timeAlignmentTimer* is associated with an STAG, then for all Serving Cells belonging to this TAG:

3> flush all HARQ buffers;

3> notify RRC to release PUCCH, if configured;

3> notify RRC to release SRS, if configured;

3> clear any configured downlink assignments and configured uplink grants;

3> clear any PUSCH resource for semi-persistent CSI reporting;

3> maintain $N_{TA}$ (defined in TS 38.211 [8]) of this TAG.

1> when the *inactivePosSRS-TimeAlignmentTimer* expires:

2> notify RRC to release Positioning SRS for RRC_INACTIVE configuration(s).

1> when the *cg-SDT-TimeAlignmentTimer* expires:

2> clear any configured uplink grants;

2> if a PDCCH addressed to the MAC entity's C-RNTI after initial transmission for the CG-SDT with CCCH message has not been received:

3> consider ongoing CG-SDT procedure as terminated;

3> indicate the expiry of *cg-SDT- TimeAlignmentTimer* to the upper layer.

2> flush all HARQ buffers;

2> maintain $N_{TA}$ (defined in TS 38.211 [8]) of this TAG.

When the MAC entity stops uplink transmissions for an SCell due to the fact that the maximum uplink transmission timing difference between TAGs of the MAC entity or the maximum uplink transmission timing difference between TAGs of any MAC entity of the UE is exceeded, the MAC entity considers the *timeAlignmentTimer* associated with the SCell as expired.

The MAC entity shall not perform any uplink transmission on a Serving Cell except the Random Access Preamble and MSGA transmission when the *timeAlignmentTimer* associated with the TAG to which this Serving Cell belongs is not running, CG-SDT procedure is not ongoing or SRS transmission in RRC_INACTIVE as in clause 5.26 is not on-going.

(continued)

> Furthermore, when the *timeAlignmentTimer* associated with the PTAG is not running, CG-SDT procedure is not ongoing and SRS transmission in RRC _INACTIVE as in clause 5.26 is not ongoing, the MAC entity shall not perform any uplink transmission on any Serving Cell except the Random Access Preamble and MSGA transmission on the SpCell.
>
> The MAC entity shall not perform any uplink transmission except the Random Access Preamble and MSGA transmission when the *cg-SDT-TimeAlignmentTimer* is not running during the ongoing CG-SDT procedure as triggered in clause 5.27. The MAC entity shall not perform any uplink transmission except the Random Access Preamble and MSGA transmission when *inactivePosSRS-TimeAlignmentTimer* is not running during the procedure for SRS transmission in RRC_INACTIVE as in clause 5.26.

The contents described above may be applied in combination with methods proposed in the present disclosure to be described below or may be supplemented to clarify technical features of the methods proposed in the present disclosure. Methods to be described below are just distinguished for convenience of description and it is needless to say that some components of any one method may be substituted with some components of another method or may be applied in combination with each other.

According to the 3GPP standard up to the NR Rel-17, the handover operation by the mobility of the UE is performed as follows. The UE reports (L3-based) RSRP measurement for a candidate serving cell which is a non-serving cell. The base station triggers handover to the UE after handover decision based on the report. At this time, the UE performs detach for the serving cell and performs an RACH procedure for synchronization for a new cell. The UE may acquire TA information for the cell through RAR reception from a cell for which intends to newly perform the attach.

In Rel-18 mobility enhancement, the base station/UE acquires the TA information for the candidate serving cell before a handover command, and a base station/UE operation for reducing latency (by omitting the RACH procedure) during the handover is discussed (see Table 9 below). An RACH-based approach and an RACH-less approach are considered as methods for acquiring the TA for the candidate (serving) cell.

[Table 9]

> <RP-213565>
>
> 1. To specify mechanism and procedures of L1/L2 based inter-cell mobility for mobility latency reduction:
>
> o Configuration and maintenance for multiple candidate cells to allow fast application of configurations for candidate cells [RAN2, RAN3]
>
> o Dynamic switch mechanism among candidate serving cells (including SpCell and SCell) for the potential applicable scenarios based on L1/L2 signalling [RAN2, RAN1]
>
> o L1 enhancements for inter-cell beam management, including L1 measurement and reporting, and beam indication [RAN1, RAN2]
>
> - *Note 1: Early RAN2 involvement is necessary, including the possibility of further clarifying the interaction between this bullet with the previous bullet*
>
> ◦ Timing Advance management [RAN1, RAN2]
>
> ◦ CU-DU interface signaling to support L1/L2 mobility, if needed [RAN3]

Meanwhile, in Rel-18 mobility -TA management, an agreement is reached as shown in Table 10 below.

[Table 10]

> Agreement
>
> Support TA acquisition of candidate cell(s) before cell switch command is received in L1/L2 based mobility.
>
> • FFS: whether this can be applied to candidate cell when it is deactivated SCell (if defined in RAN2)
>
> Agreement
>
> On mechanism to acquire TA of the candidate cells, the following solutions can be further studied:
>
> • RACH-based solutions
>
> e.g., PDCCH ordered RACH, UE-triggered RACH, higher layer triggered RACH from NW other than L3 HO cmd
>
> • RACH-less solutions
>
> e.g., SRS based TA acquisition, Rx timing difference based, RACH-less mechanism as in LTE, UE based TA measurement (including UE based TA measurement with one TAC from serving cell)
>
> Agreement

(continued)

For TA acquisition of a candidate cell before cell switch command is received, study at least the following alternatives of associating TA/TAG to candidate cell:

• Alt1: Associate TA/TAG and candidate cell implicitly, e.g.,

• the association between TA/TAG and TCI states can be configured

• Alt2: Associate TA/TAG and candidate cell explicitly, e.g.,

• the association is provided as a part of candidate cell(s) configuration

• the association between TA/TAG and SSB(s)/TRS(s) is provided as a part of candidate cell(s) configuration

Agreement

On mechanism to acquire TA of the candidate cell(s) in Rel-18 LTM, at least support PDCCH ordered RACH.

L The PDCCH order is only triggered by source cell

L FFS: the details including content of DCI, RACH resource configuration, RAR transmission mechanism, etc.

L Note: any other RACH-based solutions are for discussion separately

Agreement

For PDCCH ordered RACH in LTM, at least the following enhancements are supported

• Introduce indication of candidate cell and/or RO of candidate cell in DCI

• configuration of RACH resource for candidate cell(s) is provided prior to the PDCCH order

• FFS: whether/how to transmit RAR

Agreement

On whether RAR is needed for PDCCH ordered RACH for a candidate cell in LTM, the following alternatives are considered for further study

• Alt 1: RAR is needed

• Alt 2: RAR is not needed

- Note: If Alt 2 is supported, TA value of candidate cell is indicated in cell switch command

• Alt 3: whether RAR is needed can be configured

Agreement

• TA updating (i.e. re-acquisition of TA) for candidate cell can be triggered by NW.

• same triggering mechanism reuse the initial TA acquisition, i.e., PDCCH order triggered RACH in a candidate cell

Agreement

For Rel-18 LTM, Random Access Preamble indices and indication of RACH occasions with the associated SSB indices are configured for each candidate cell.

Note: the detailed signalling is left to RAN2

Agreement

The PDCCH order from the source cell contains the indication of candidate cell.

■ The reserved bit(s) in DCI format 1_0 for PDCCH order can be used for indication of cell identity

Agreement

For PDCCH ordered-RACH for candidate cell(s), RAR reception can be configured/indicated

■ If reception of RAR is not configured/indicated (without RAR)

- TA value of candidate cell is indicated in cell switch command

- FFS: whether UE should re-transmit PRACH when reception of RAR is not configured/indicated

- FFS: how UE determine the transmit power of subsequent PRACH triggered by PDCCH order

■ If reception of RAR is configured/indicated (with RAR), FFS

- whether RAR is received from serving cell or candidate cell

♦ if RAR is received from candidate cell, whether Type1-PDCCH CSS of the candidate cell is configured to the UE

- content of RAR

■ FFS: signaling for configuration/indication of whether RAR needs to be received

■ UE can report the support combination of with RAR only and without RAR only, where support of one default scheme is the baseline UE approach for LTM

■ Send LS to RAN2 and RAN3 to check the feasibility about this agreement

■ Note: Definition of candidate cells is up to RAN2

Agreement

• For PDCCH-order based RACH for TA measurement for candidate cells, legacy CBRA is not supported

Agreement

(continued)

on whether UE should initiate re-transmit PRACH when reception of RAR is not configured/indicated, down select one from the following alternatives.

• Alt 1: UE autonomous re-transmission of PRACH is not allowed (e.g., by setting the number of allowed PRACH transmission to the minimum value of PreambleTransMax=1)

• Alt 2: UE autonomous Re-transmission of PRACH is allowed,

• The number of PRACH transmission will be defined e.g. set the times of RACH transmission to the minimum value of PreambleTransMax

Agreement

If reception of RAR is configured/indicated, RAR contains at least TA of candidate cell.

• The maximum number of TA values memorized by UE is a UE capability

• FFS: whether other parameters such as UE ID, candidate cell ID etc. is contained in RAR

Agreement

Whether RAR needs to be received is configured by RRC.

Agreement

study at least the following issues on PDCCH-order based PRACH for candidate cell that is not UL serving cell, i.e. without PUCCH/PUSCH configured

• Whether gap between the DCI and PRACH longer than timeline defined in spec is needed

• Any impact/interruption on UL Tx of serving CCs due to the PRACH Tx

Working Assumption

UE-based TA measurement (UE derives TA based on Rx timing difference between current serving cell and candidate cell as well as TA value for the current serving cell) is supported.

• Corresponding UE capability is to be introduced to support UE-based TA measurement

• For a UE reports support of this capability, configuration of UE-based TA measurement is supported

FFS: other impacts on RANI spec

In summary, a PDCCH ordered CFRA procedure may be used in the RACH-based approach to acquire the TA for the candidate cell. Whether the RAR for the RACH transmission is to be present may be configured based on the RRC. A PRACH configuration for the candidate cell may be preconfigured to the UE for the RACH transmission for the candidate cell. Ordering DCI (PDCCH order DCI) may trigger the RACH transmission of the UE for the candidate cell. As an example, an ID of the candidate cell and/or the RACH resource for the candidate cell may be indicated based on the DCI.

When the RAR is present, whether the RAR is to be transmitted in the serving cell or the candidate cell is discussed. Technical issues in this regard are as follows.

Issue 1: It is necessary to specify which UE ID is used to transmit the RAR scheduling DCI. That is, depending on whether the serving cell or the candidate cell transmits the RAR, it may be ambiguous which UE ID is used to transmit the RAR scheduling DCI.

Issue 2: It is necessary to define/specify how contents of an RAR MAC CE of an RAR PDSCH scheduled by the RAR scheduling DCI are configured. This is because a part of information (e.g., TC-RNTI and UL grant) included in an existing RAR payload may be unnecessary since the RACH is transmitted for the TA acquisition of the candidate cell.

Issue 3: It is necessary to specify whether the completion for the UE RACH procedure may be performed with general grant/non-grant DCI in addition to the RAR scheduling DCI.

Based on the issues, in the present disclosure, a method in which the base station configures/indicates RACH transmission directed to the candidate serving cell and a method for transmitting an RACH response in an Rel-18 LTM (L1/L2-triggered mobility) for mobility enhancement are described, and related UE operations are proposed.

In the present disclosure, '/' may be interpreted as 'and', 'or', or 'and/or' according to a context. The non-serving cell that may be a target of UE handover may be used mixedly with a candidate serving cell, a candidate cell, a target cell, a target candidate cell, and the like.

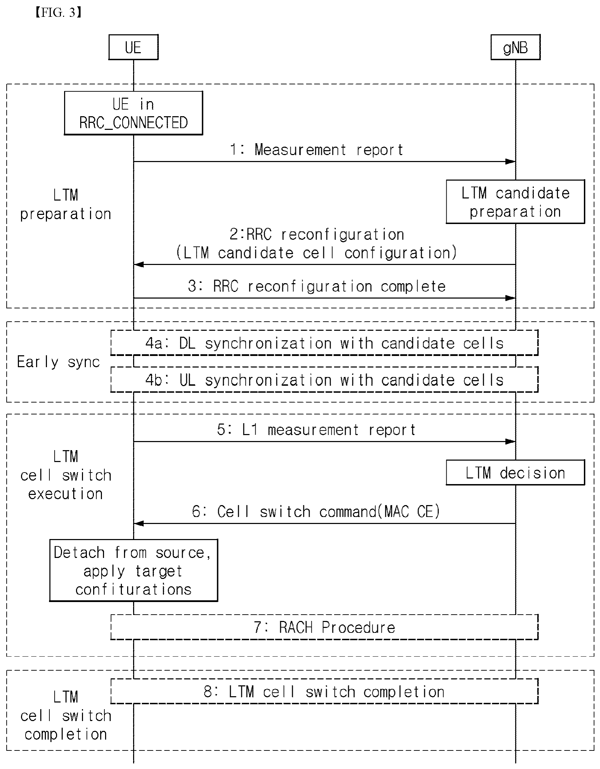

In addition, the base station may configure one or more candidate cell information before a handover command for the Rel-18 LTM. The configuration of the candidate cell information may include a PCI, a RACH configuration (e.g., an RACH preamble, an RACH occasion, an RACH resource, and/or an SSB index related to each candidate cell), and the like for each candidate cell that is the non-serving cell that may be a potential serving cell. For example, a procedure related to the LTM may be based on FIG. 3.

FIG. 3 illustrates a procedure related to an LTM to which a method according to embodiment of the present disclosure may be applied. Specifically, the procedure related to the LTM may be performed based on Table 11 below.

[Table 11]

9.2.3.5 L1/L2-Triggered Mobility

9.2.3.5.1 General

LTM is a procedure in which a gNB receives L1 measurement report(s) from a UE, and on their basis the gNB changes UE serving cell by a cell switch command signalled via a MAC CE. The cell switch command indicates an LTM candidate configuration that the gNB previously prepared and provided to the UE through RRC signalling. Then the UE switches to the target configuration according to the cell switch command. The LTM procedure can be used to reduce the mobility latency as described in Annex G.

When configured by the network, it is possible to activate TCI states of one or multiple cells that are different from the current serving cell. For instance, the TCI states of the LTM candidate cells can be activated in advance before any of those cells become the serving cell. This allows the UE to be DL synchronized with those cells, thereby facilitating a faster cell switch to one of those cells when cell switch is triggered.

When configured by the network, it is possible to initiate UL TA acquisition (called early TA) procedure of one or multiple cells that are different from the current serving cells. If the cell has the same $N_{TA}$ as the current serving cells or $N_{TA}=0$, early TA acquisition procedure is not required. The network may request the UE to perform early TA acquisition of a candidate cell before a cell switch. The early TA acquisition procedure is triggered by PDCCH order as specified in clause 9.2.6 or realized through UE-based TA measurement as configured by RRC. In the former case, the gNB to which the candidate cell belongs calculates the TA value and sends it to the gNB to which the serving cell belongs. The serving cell sends the TA value in the LTM cell switch command MAC CE when triggering LTM cell switch. In the latter case, the UE performs TA measurement for the candidate cells after being configured by RRC but the exact time the UE performs TA measurement is up to UE implementation. The UE applies the TA value measured by itself and performs RACH-less LTM upon receiving the cell switch command. The network may also send a TA value in the LTM cell switch command MAC CE without early TA acquisition.

Depending on the availability of a valid TA value, the UE performs either a RACH-less LTM or RACH-based LTM cell switch. If the TA value is provided in the cell switch command, the UE applies the TA value as instructed by the network. In the case where UE-based TA measurement is configured, but no TA value is provided in the cell switch command, the UE applies the TA value by itself if available. Meanwhile, the UE performs RACH-less LTM cell switch upon receiving the cell switch command. If no valid TA value is available, the UE performs RACH-based LTM cell switch.

Regardless of whether the UE is configured for UE-based TA measurement for a certain candidate cell, it will still follow the PDCCH order, which includes requesting a random access procedure towards the candidate cells. This also applies to the candidate cells for which the UE is capable of deriving TA values by itself. Additionally, regardless of whether the UE has already performed a random access procedure towards the candidate cells, it will still follow the UE-based measurement configuration if configured by the network.

For RACH-less LTM, the UE accesses the target cell using either a configured grant or a dynamic grant. The configured grant is provided in the LTM candidate configuration, and the UE selects the configured grant occasion associated with the beam indicated in the cell switch command. Upon initiation of LTM cell switch to the target cell, the UE starts to monitor PDCCH on the target cell for dynamic scheduling. Before RACH-less LTM procedure completion, the UE shall not trigger random access procedure if it does not have a valid PUCCH resource for triggered SRs.

The following principles apply to LTM:

- Security key is maintained upon an LTM cell switch;

- Subsequent LTM is supported.

LTM supports both intra-gNB-DU and intra-gNB-CU inter-gNB-DU mobility. LTM supports both intra-frequency and inter-frequency mobility, including mobility to inter-frequency cell that is not a current serving cell. LTM is supported only for licensed spectrum. The following scenarios are supported:

- PCell change in non-CA scenario and non-DC scenario;

- PCell and SCell(s) change in CA scenario;

- Dual connectivity scenario, PCell and MCG SCell(s) change and intra-SN PSCell and SCG SCell(s) change without MN involvement. LTM for simultaneous PCell and PSCell change is not supported.

While the UE has stored LTM candidate configurations the UE can also execute any L3 handover command sent by the network.

9.2.3.5.2 C-Plane Handling

Cell switch command is conveyed in a MAC CE, which contains the necessary information to perform the LTM cell switch.

(continued)

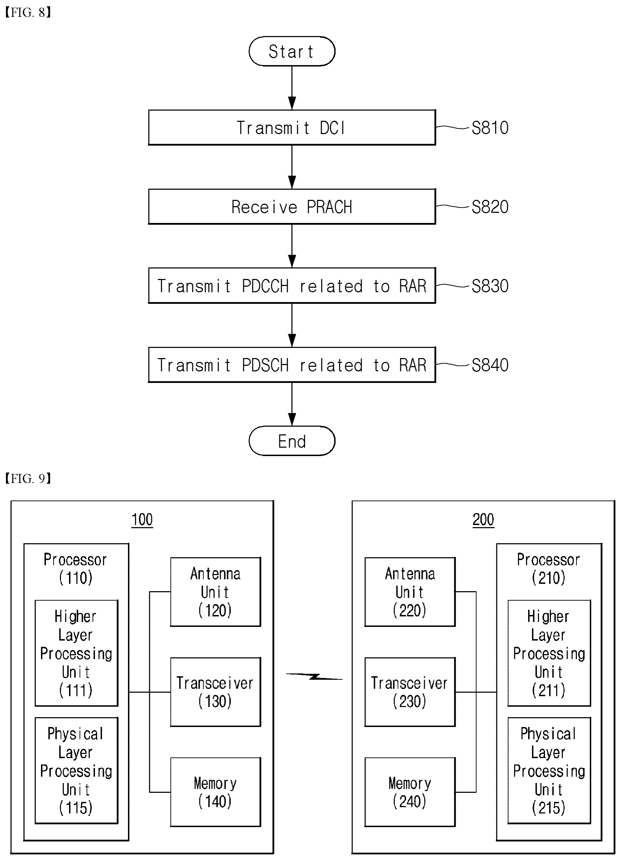

> The overall procedure for LTM is shown in Figure 9.2.3.5.2-1 below. Subsequent LTM is done by repeating the early synchronization, LTM cell switch execution, and LTM cell switch completion steps without releasing other LTM candidate configurations after each LTM cell switch completion. The general procedure over the air interface is applicable to SCG LTM. Further details of SCG LTM can be found in TS 37.340 [21].

> The procedure for LTM is as follows:
>
> 1. The UE sends a *MeasurementReport* message to the gNB. The gNB decides to configure LTM and initiates LTM preparation.
>
> 2. The gNB transmits an *RRCReconfiguration* message to the UE including the LTM candidate configurations.
>
> 3. The UE stores the LTM candidate configurations and transmits an *RRCReconfigurationComplete* message to the gNB.
>
> 4a. The UE performs DL synchronization with the candidate cell(s) before receiving the cell switch command.
>
> 4b. When UE-based TA measurement is configured, UE acquires the TA value(s) of the candidate cell(s) by measurement. UE performs early TA acquisition with the candidate cell(s) as requested by the network before receiving the cell switch command as specified in clause 9.2.6. This is done via CFRA triggered by a PDCCH order from the source cell, following which the UE sends preamble towards the indicated candidate cell. In order to minimize the data interruption of the source cell due to CFRA towards the candidate cell(s), the UE does not receive random access response from the network for the purpose of TA value acquisition and the TA value of the candidate cell is indicated in the cell switch command. The UE does not maintain the TA timer for the candidate cell and relies on network implementation to guarantee the TA validity.
>
> 5. The UE performs L1 measurements on the configured candidate cell(s) and transmits L1 measurement reports to the gNB. L1 measurement should be performed as long as RRC reconfiguration (step 2) is applicable.
>
> 6. The gNB decides to execute cell switch to a target cell and transmits a MAC CE triggering cell switch by including the candidate configuration index of the target cell. The UE switches to the target cell and applies the configuration indicated by candidate configuration index.
>
> 7. The UE performs the random access procedure towards the target cell, if UE does not have valid TA of the target cell as specified in clause 6.1.3.xy of TS 38.321[6].
>
> 8. The UE completes the LTM cell switch procedure by sending *RRCReconfigurationComplete*
> message to target cell. If the UE has performed a RA procedure in step 7 the UE considers that LTM cell switch execution is successfully completed when the random access procedure is successfully completed. For RACH-less LTM, the UE considers that LTM cell switch execution is successfully completed when the UE determines that the network has successfully received its first UL data.
>
> The steps 4-8 can be performed multiple times for subsequent LTM using the LTM candidate configuration(s) provided in step 2.
>
> The procedure over the air interface described in Figure x is applicable to both intra-gNB-DU LTM and inter-gNB-DU LTM. The overall LTM procedures over F1-C interface are captured in TS 38.401[4].
>
> 9.2.3.5.3 U-Plane Handling
>
> After receiving an LTM cell switch command MAC CE, the UE performs MAC reset. Whether the UE performs RLC re-establishment and PDCP data recovery during cell switch is explicitly controlled by the network through RRC signalling.

According to Issue 1 above, it is necessary to specify which UE ID is used to transmit the RAR scheduling DCI according to whether the serving cell or the candidate cell transmits the RAR. A solution to Issue 1 above is described in Proposal 1 below.

Proposal 1

Hereinafter, a method for transmitting an RAR corresponding to RACH transmission for the candidate cell of the UE will be specifically described.

Proposal 1-1

It may be assumed that the serving cell transmits the RAR corresponding to the RACH transmission for the candidate cell of the UE. That is, the UE may receive, from the serving cell, the RAR corresponding to the RACH transmission for the candidate cell.

In this case, since a subject receiving the RACH is the candidate cell that is the non-serving cell, whether the RACH is normally received and contents of the RAR may be forwarded to the serving cell.

When the candidate cell successfully receives the RACH and the serving cell transmits the forwarded RAR, operation i) or ii) below may be performed.

i) The (Cyclic Redundancy Check (CRC) of the RAR scheduling DCI is scrambled by the C (Cell)-RNTI. The UE may perform blind detection (in the RAR window) through the CRC check based on the C-RNTI.

ii) The RAR scheduling DCI and the Cyclic Redundancy Check (CRC) are scrambled by a Random Access (RA)-RNTI. The UE may perform the blind detection (in the RAR window) through the CRC check based on the RA-RNTI.

In Method i, the C-RNTI may be a C-RNTI configured by a current serving cell.

In Method ii, the RA-RNTI may be calculated based on Table 12 below.

[Table 12]

**For 4-step RACH:**

The RA-RNTI associated with the PRACH occasion in which the Random Access Preamble is transmitted, is computed as:

$$RA\text{-}RNTI = 1 + s\_id + 14 \times t\_id + 14 \times 80 \times f\_id + 14 \times 80 \times 8 \times ul\_carrier\ id$$

where s_id is the index of the first OFDM symbol of the PRACH occasion ($0 \leq s\_id < 14$), t_id is the index of the first slot of the PRACH occasion in a system frame ($0 \leq t\_id < 80$), where the subcarrier spacing to determine t_id is based on the value of i specified in clause 5.3.2 in TS 38.211 [8] for i = {0, 1, 2, 3}, and for i = {5, 6}, t_id is the index of the 120 kHz slot in a system frame that contains the PRACH occasion ($0 \leq t\_id < 80$), f_id is the index of the PRACH occasion in the frequency domain ($0 \leq f\_id < 8$), and ul_carrier_id is the UL carrier used for Random Access Preamble transmission (0 for NUL carrier, and 1 for SUL carrier).

**For 2-step RACH:**

The MSGB-RNTI associated with the PRACH occasion in which the Random Access Preamble is transmitted, is computed as:

$$MSGB\text{-}RNTI = 1 + s\_id + 14 \times t\_id + 14 \times 80 \times f\_id + 14 \times 80 \times 8 \times ul\ carrier\_id + 14 \times 80 \times 8 \times 2$$

where s_id is the index of the first OFDM symbol of the PRACH occasion ($0 \leq s\_id < 14$), t_id is the index of the first slot of the PRACH occasion in a system frame ($0 \leq t\_id < 80$), where the subcarrier spacing to determine t_id is based on the value of i specified in clause 5.3.2 in TS 38.211 [8] for i = {0, 1, 2, 3}, and for i = {5, 6}, t_id is the index of the 120 kHz slot in a system frame that contains the PRACH occasion ($0 \leq t\_id < 80$), f_id is the index of the PRACH occasion in the frequency domain ($0 \leq f\_id < 8$), and ul_carrier_id is the UL carrier used for Random Access Preamble transmission (0 for NUL carrier, and 1 for SUL carrier). The RA-RNTI is calculated as specified in clause 5.1.3.

In the present disclosure, proposed is an operation of additionally adding a Physical Cell ID (PCI) for the target candidate cell transmitting the RACH when calculating the RA-RNTI in Method ii. The RA-RNTI (MSGB-RNTI) including the PCI of the candidate cell may be calculated as follows.

The operation of calculating the RA-RNTI by additionally considering the PCI for the candidate cell may include not only a case of using a PCI value as it is, but also a case of using an ID (e.g., C_id) based on the number of candidate cells configured to the UE.

For example, the total number of candidate cells configured to the UE is C, and C_id may be allocated to each candidate cell (or/and C_id may be replaced with a TAG-id related to the candidate cell).

As an example, C_id may be configured explicit by base station RRC signalling (to be candidate cell specific).

As an example, C_id may be an id implicitly mapped/linked to the PCI(s) of the candidate cell(s). As a specific example, C_id may be sequentially implicitly mapped/linked to the PCI of a candidate cell having a lowest ID (highest ID) among the candidate cells (e.g., C_id = 0, 1, 2 or C_id = 1, 2, 3...).

Hereinafter, examples related to calculation of the RA-RNTI (MSGB-RNTI) are described.

Embodiment 1) When the PCI of the candidate cell is directly used, the RA-RNTI (MSGB-RNTI) may be calculated as follows.

$$RA\text{-}RNTI = 1 + s\_id + 14 \times t\_id + 14 \times 80 \times f\_id + 14 \times 80 \times 8 \times ul\_carrier\_id + \underline{\textbf{PCI (of candidate cell)}}$$

MSGB-RNTI = 1 + s_id + 14 × t_id + 14 × 80 × f_id + 14 × 80 × 8 × ul_carrier_id + 14 × 80 × 8 × 2 + **PCI (of candidate cell)**

Embodiment 2) When the C_id value of the serving cell is 0, and the C_id value is 1 regardless of the PCI of the cell in the case of the non-serving cell (candidate cell), the RA-RNTI (MSGB-RNTI) may be calculated as follows (see FIG. 4).

$$RA\text{-}RNTI = 1 + s\_id + 14 \times t\_id + 14 \times 80 \times f\_id + 14 \times 80 \times 8 \times ul\_carrier\_id + \mathbf{\underline{14 \times 80 \times 8 \times 4 \ x \ C\_id}}$$

MSGB-RNTI=1+s_id +14 × t_id + 14 × 80 × f_id + 14 × 80 × 8 × ul_carrier id **+ $\underline{14 \times 80 \times 8 \times 2 + 14 \times 80 \times 8 \times 4 \times C\_id}$**

FIG. 4 illustrates an RNTI according to an embodiment of the present disclosure. Specifically, FIG. 4 illustrates the RA-RANTI and the MSGB-RNTI based on Embodiment 2.
Embodiment 3) When the C_id value of the serving cell is 0, and a C_id value of 1 or more is provided by the above-described explicit/implicit method in the case of the non-serving cell (candidate cell), the RA-RNTI (MSGB-RNTI) may be calculated as follows (see FIG. 5).

$$RA\text{-}RNTI = 1 + s\_id + 14 \times t\_id + 14 \times 80 \times f\_id + 14 \times 80 \times 8 \times ul\_carrier\_id + \mathbf{\underline{14 \times 80 \times 8 \times 4 \ x \ C\_id}}$$

MSGB-RNTI = 1 + s_id + 14×t_id + 14 × 80 × f_id + 14 × 80 × 8 × ul_carrier_id + 14 × 80 × 8 × 2 + $\underline{14 \times 80 \times 8 \times 4 \ x \ C \ id}$

FIG. 5 illustrates an RNTI according to another embodiment of the present disclosure. Specifically, FIG. 5 illustrates the RA-RANTI and the MSGB-RNTI based on Embodiment 3. In FIG. 5, it is assumed that three candidate cells are configured in the UE. Referring to FIG. 5, C_ids are 1, 2, and 3 for candidate cells #1 to #3.
Embodiment 4) When the C_id explicitly/implicitly configured/mapped/linked to each candidate cell configured as described above is used (allocated to each candidate cell from C_id 0), the RA-RNTI (MSGB-RNTI) may be calculated as follows (see FIG. 6).

RA-RNTI = 1 + s_id + 14 × t_id + 14 × 80 × f_id + 14 × 80 × 8 × ul_carrier_ id + $\underline{14 \times 80 \times 8 \times 4 + 14 \times 80 \times 8 \times 2x \ C \ id}$

MSGB-RNTI = 1 + s_id + 14 × t_id + 14 × 80 × f_id + 14 × 80 × 8 × ul_carrier_id + 14 × 80 × 8 × 2 + 14 × 80 × 8 × 2 **+ $\underline{14 \times 80 \times 8 \times 2 \times C\_id + 14 \times 80 \times 8 \times 2 \times C\_id}$**

FIG. 6 illustrates an RNTI according to yet another embodiment of the present disclosure. Specifically, FIG. 6 illustrates the RA-RANTI and the MSGB-RNTI based on Embodiment 4. In FIG. 6, it is assumed that three candidate cells are configured in the UE. Referring to FIG. 6, C_ids are 0, 1, and 2 for candidate cells #1 to #3.
Embodiment 5) When the Supplementary UpLink (SUL) is not configured to the UE, the RA-RNTI (MSGB-RNTI) may be calculated based on the PCI (or C_id) of the non-serving cell (candidate cell) instead of the ul_carrier id. As an example, the base station/UE may interpret a carrier indicator value as indicating the non-served cell (candidate cell).
Embodiment 6) Unlike the above-described embodiments, a method for adding an offset value to S_id instead of using the PCI or/and C_id may be considered. For example, the RA-RNTI (MSGB-RNTI) may be calculated by adding an offset of 0 or a to an index (s_id) for an OFDM symbol position. As a specific example, the RA- RNTI (MSG-RNTI), may be calculated based on s_id' instead of s_id (s_id' = s_id + a * N). At this time, N=0 or 1, N = 0 may be defined/configured for the serving cell, and N = 1 may be defined/configured for the non-serving cell (candidate cell).
Each embodiment related to the calculation of the RA-RNTI (MSGB-RNTI) is not intended to limit the technical idea according to the embodiment of the present disclosure to the corresponding equation. That is, it is obvious that the technical idea of the embodiment of the disclosure also includes a case where an existing defined equation (e.g., Table 12) is changed in order to further consider the information (such as id, index, offset, etc.) related to the candidate cell in the calculation of the RA-RNTI (MSGB-RNTI).
Additionally, when the RNTI value deviates from a max range ($0 \sim 2^{16} - 1$) in the equations based on the embodiments, a modulo operation for the value may be added. As an example, the RA-RNTI (MSGB-RNTI) may be determined as 'values calculated based on Embodiments 1 to 6' mod RNTI maximum value (e.g., $2^{16} - 1$).
A problem in that RA-RNTIs of different UEs collide with each other may be resolved by newly defining the RA-RNTI (MSGB-RNTI) for the RACH transmitted to the candidate cell as described above. Specifically, a problem in that an RA-RN I (RA-RNTI #1) corresponding to the RACH transmitted to the serving cell by UE #1 collides with RA-RNTI (RA-RNTI #2) corresponding to the RACH transmitted to the candidate cell by UE #2 may be resolved.

Proposal 1-2

It may be assumed that the candidate cell transmits the RAR corresponding to the RACH transmission for the candidate cell of the UE. That is, the UE may receive, from the candidate cell, the RAR corresponding to the RACH transmission for the candidate cell.

In this case, an additional type 1 Common Search Space (CSS) (or an additional type 1 CSS set) for receiving the RAR scheduling DCI from the candidate cell, which is the non-serving cell, may be configured to the UE. The UE may perform detection for the RAR scheduling DCI for the additional type 1 CSS in the RAR window after the RACH transmission for the candidate cell.

When the candidate cell successfully receives the RACH, and the candidate cell transmits the RAR, the RAR scheduling DCI may be scrambled by the RA-RNTI, so that the UE may perform the blind detection (in the RAR window) through the CRC check by using the RA-RNTI. The RA-RANTI may be calculated based on an existing scheme (e.g., Table 12). Or/and the RA-RNTI may be calculated by additionally considering the PCI and/or C_id of the candidate cell (performing the RACH transmission) as in the embodiment of Proposal 1-1.

Additional embodiment of Proposal 1-2

When the additional type 1 CSS is separately configured for RACH scheduling DCI reception for a specific candidate cell which is the non-serving cell as described above, type 1 CSS (or type 1 CSS set) may be configured for each of a plurality of candidate serving cells. In this case, a number of configured CSSs may exceed a UE capability corresponding to a maximum value of a number of SSs that may perform PDCCH monitoring for a CSS (in a specific DL slot) of the UE.

At this time, the base station configures the number of CSSs not to exceed the UE capability during the additional type 1 CSS configuration for the candidate cell. That is, the UE does not expect the number of SSs based on the additional type 1 CSS configuration for the candidate cell to exceed the number of SSs based on the UE capability.

Or/and when there are a plurality of type 1 CSSs configured for the candidate cell(s), the UE may drop the CSS of the candidate cell according to the PCI/C_id/TAG id of the candidate cell when the number of CSSs to be monitored exceeds the UE capability. This takes into account that an importance of the type 1 CSS of the candidate cell may be lower than that of the type 1CSS of the serving cell. Here, the drop may mean that the monitoring of the CSS of the candidate cell is not performed. As an example, the candidate cell having the lowest/highest PCI/C_id/TAG id has a high priority, and may be dropped from (monitoring for) the CSS corresponding to the candidate cell having a low priority.

As an additional embodiment of Proposal 1, a method for indicating the PCI corresponding to the candidate cell performing the RACH transmission in the RAR scheduling DCI for accurate RAR reception is proposed.

An agreement has been made to indicate the cell id (for the target candidate cell) in the DCI for triggering the RACH toward the candidate cell to the PDCCH order as in the progress of the standardization discussion above. A similar indication may be performed based on the RAR scheduling DCI.

According to an embodiment, the PCI of the candidate cell receiving the RACH or/and the C_id in the embodiments may be included in the RAR scheduling DCI. The operation of indicating the candidate cell information in the RAR timing DCI may be configured/indicated by the base station to be performed when the RA-RNTI value for the RACH directed to the candidate cell is the same as the RA-RNTI value for the serving cell. As a result, the UE may explicitly confirm the RAR corresponding to the RACH transmitted to the candidate cell by the UE without ambiguity (via the PCI or/and C_id confirmation) and perform the RAR reception operation.

According to an embodiment, the PCI or/and the C_id corresponding to the candidate cell performing the RACH transmission may be included in the RAR MAC CE format forwarded by the RAR PDSCH scheduled by the RAR scheduling DCI. This may have an effect similar to the method of indicating the PCI or/and the C_id corresponding to the candidate cell in the RAR scheduling DCI.

The operation of indicating the candidate cell information based on the RAR scheduling DCI may not be performed in cases 1) and/or 2) below.

1) Case where the RA-RNTI value for the RACH directed to the candidate cell is distinguished from the RA-RNTI value for the serving cell as in Proposal 1-1

2) Case where as search space for monitoring the RAR for the candidate cell is the CSS configured for the non-serving cell (candidate cell)

In the case of Proposal 1-1 above, the serving cell needs to send the RAR forwarded by the candidate cell to the UE, which may result in additional latency of RAR forwarding. In order to solve this problem, the following embodiments may be applied.

As an example, the RAR window for receiving the RAR scheduling DCI of Proposal 1-1 may be configured separately (longer than the RAR window of the serving cell).

As an example, a separate starting offset (longer than the serving cell) may be configured/indicated for the RAR window for receiving the RAR scheduling DCI of Proposal 1-1.

In Proposal 1 above, C_id may be replaced with a TAG id related to/associated with the candidate cell(s).

Embodiments of proposal 1 may operate by a combination of one or more embodiments.

An example of the UE (or base station) operation based on at least one of the embodiments described above (e.g. at least one of the embodiments of Proposal 1) is as follows.

1) The UE (base station) receives (transmits) configuration information for a candidate cell.
The configuration information for the candidate cell may include information based on at least one of the embodiments of Proposal 1. For example, the configuration information may include a PCI, a C_id, a TAG id, and/or a PRACH configuration related to each candidate cell.
2) The UE (base station) receives (transmits) a message for configuring/indicating the RACH transmission for the candidate cell. The message may be a PDCCH triggering/ordering a CFRA-based RACH.
3) The UE (base station) transmits (receives) an RACH based on the message.
4) The UE (base station) transmits (receives) an RAR based on an RAR window.

The RAR may be received from a serving cell or a candidate cell. That is, a cell related to the transmission of the RAR may be the serving cell or the candidate cell.

A transmission method and a configuration of the RAR scheduling DCI related to the RAR and an RA MAC CE of an RAR PDSCH may be based on at least one of the embodiments of Proposal 1.

The UE/base station operations are only examples, and each operation (or step) is not necessarily required, and operations related to the TA acquisition for the candidate cell of the UE according to the above-described embodiments may be omitted or added depending on the UE/base station implementation scheme.

In terms of implementation, the operations (e.g., operations based on at least one of the embodiments of Proposal 1) of the base station/UE according to the above-described embodiments may be processed by devices (e.g., processors 110 and 210 in FIG. 9) in FIG. 9 to be described below.

Further, the operations (e.g., operations based on at least one of the embodiments of Proposal 1) of the base station/UE according to the above-described embodiment may be stored in memories (e.g., 140 and 240 in FIG. 9) in the form of an instruction/program (e.g., instruction or executable code) for driving at least one processor (e.g., 110 and 210 in FIG. 9).

Hereinafter, the above-described embodiments will be described in detail with reference to FIGS. 7 and 8 in terms of the operations of the UE and the base station. Methods to be described below are just distinguished for convenience of description and it is needless to say that some components of any one method may be substituted with some components of another method or may be applied in combination with each other.

FIG. 7 is a flowchart for describing a method performed by a user equipment (UE) according to an embodiment of the present disclosure.

Referring to FIG. 7, a method performed by the UE according to an embodiment of the present disclosure may include a DCI receiving step S710, a PRACH transmitting step S720, an RAR related PDCCH receiving step S730, and an RAR related PDSCH receiving step S740.

In S710, the UE receives Downlink Control Information (DCI) related to initiation of a Random Access Procedure from the base station.

As an example, the DCI may include information related to a Physical Downlink Control Channel (PDCCH) order.

In S720, the UE transmits a Physical Random Access CHannel (PRACH) to the base station. As an example, the PRACH may be related to a second cell different from a first cell.

According to an embodiment, the first cell may be a serving cell and the second cell may be a candidate cell. As an example, the candidate cell may be one of candidate cells configured in the UE. As a specific example, the candidate cell may be one of the candidate cells configured based on step 2 (LTM candidate cell configuration) of FIG. 3 and Table 9.

In S730, the UE receives, from the base station, a Physical Downlink Control CHannel (PDCCH) related to a Random Access Response (RAR).

A Physical Downlink Shared Channel (PDSCH) related to the RAR may be scheduled based on Downlink Control Information (DCI) related to the PDCCH.

As an example, a cyclic redundancy check (CRC) of downlink control information (DCI) related to the PDCCH may be scrambled based on Radio Network Temporary Identifier (RNTI).

Embodiments based on Proposal 1-1 may be applied to solve the problem that the same RNTI is used for a random access procedure related to different cells. Hereinafter, the embodiments will be specifically described.

The RNTI may be a random access (RA)-RNTI calculated based on information related to the second cell.

According to an embodiment, the RA-RNTI may be calculated based on a first value and a second value. The embodiment may be based on one of the embodiments (Embodiments 1 to 4) of Proposal 1-1.

As an example, the information related to the second cell may be a Physical Cell Identity (PCI) related to the second cell (e.g., Embodiment 1 of Proposal 1-1).

As an example, the information related to the second cell may be a cell index configured for the Physical Cell Identity (PCI) related to the second cell (e.g., explicit C_id in Embodiments 3 and 4 of Proposal 1-1).

As an example, the information related to the second cell may be a cell index mapped to the Physical Cell Identity (PCI) related to the second cell (e.g., implicit C_id in Embodiments 3 and 4 of Proposal 1-1). The cell index may be one of cell indices mapped to PCIs related to candidate cells configured in the UE. The cell indices may be mapped based on an order (for example, ascending order or descending order) of the PCIs. As a specific example, a cell index (e.g., C_id = 0 or 1) may be mapped from a lowest PCI based on an ascending order of PCIs.

As an example, the first value may be calculated based on an index related to the PRACH. The index related to the PRACH includes at least one of i) a first index related to a symbol (e.g., s_id in Table 12), ii) a second index related to a slot (e.g., t_id in Table 12), iii) a third index related to a frequency domain (e.g., f_id in Table 12), and/or iv) a fourth index related to an uplink carrier (e.g., ul_carrier id in Table 12).

As an example, the first value may be an RA-RNTI related to the first cell.

According to an embodiment, the information related to the second cell may be an offset for the symbol index (e.g., s_id in Table 12) for calculating the RA-RNTI. The embodiment may be based on Embodiment 6 of Proposal 1-1.

According to an embodiment, the DCI includes i) a Physical Cell Identity (PCI) related to the second cell and/or ii) a cell index (e.g., C_id in Proposal 1-1) related to the RA-RNTI. The embodiment may be based on an additional embodiment of Proposal 1.

According to an embodiment, the PDCCH may be received based on i) a Type 1 Common Search Space (CSS) set configured in the first cell or ii) a Type 1 PDCCH CSS set configured in the second cell. The embodiment may be based on Proposal 1-2.

In S740, the UE receives a Physical Downlink Shared CHannel (PDSCH) related to the RAR from the base station.

As an example, a transport block received based on the PDSCH may include the RAR. An MAC payload for the RAR may be based on FIG. 1.

The method may further include a candidate cell configuration receiving step. Specifically, in the candidate cell configuration receiving step, the UE may receive configuration information related to candidate cells from the base station. As an example, the candidate cell configuration receiving step may be performed before S710.

The configuration information may include a configuration related to a Physical Random Access CHannel (PRACH) for each candidate cell. As an example, the configuration information may be based on an LTM-Config IE. The configuration related to the PRACH for each candidate cell may be based on ltm-EarlyUL-SyncConfig in each LTM-Candidate configured based on the LTM-Config IE.

The operations based on S710 to S740 and the candidate cell configuration receiving step described above may be implemented by the device in FIG. 9. For example, a UE 200 may control one or more transceivers 230 and/or one or more memories 240 to perform the operations based on steps S710 to S740 and the candidate cell configuration receiving step.

Hereinafter, the embodiments described above will be specifically described in terms of operations of the base station.

Operations based on S810 to S840 and a candidate cell configuration transmitting step described below correspond to the operations based on S710 to S740 and the candidate cell configuration receiving step described in FIG. 7. By considering the correspondence relationship, redundant descriptions are omitted. That is, a specific description of a base station operation described below may be replaced with the description/embodiment of FIG. 7 corresponding to the operation.

FIG. 8 is a flowchart for describing a method performed by a base station according to another embodiment of the present disclosure.

Referring to FIG. 8, the method performed by the base station according to another embodiment of the present disclosure may include a DCI transmitting step S810, a PRACH receiving step S820, an RAR related PDCCH transmitting step S830, and an RAR related PDSCH transmitting step S840.

In S810, the base station transmits Downlink Control Information (DCI) related to initiation of a Random Access Procedure to the UE.

In S820, the base station receives a Physical Random Access CHannel (PRACH) from the UE.

In S830, the base station transmits, to the UE, a Physical Downlink Control CHannel (PDCCH) related to a Random Access Response (RAR).

In S840, the base station transmits a Physical Downlink Shared CHannel (PDSCH) related to the RAR to the UE.

The method may further include a candidate cell configuration transmitting step. Specifically, in the candidate cell configuration transmitting step, the base station may transmit configuration information related to candidate cells from the UE. As an example, the candidate cell configuration transmitting step may be performed before S810.

The operations based on S810 to S840 and the candidate cell configuration transmitting step described above may be implemented by the device in FIG. 9. For example, a base station 100 may control one or more transceivers 130 and/or one or more memories 140 to perform the operations based on S810 to S840 and the candidate cell configuration transmitting step.

The operations/terms based on the above-described embodiments are described by assuming a 5G system. However, this is for convenience of description, and is not intended to limit the scope of application of technical problems to be solved by the present disclosure, and technical solutions to a specific system. That is, the technical problems/technical issues/problems mentioned in the present disclosure may equally exist in other systems (e.g., a 6G system). It is apparent that the embodiments of the present disclosure may be extended and applied to solve the problems that equally exist in the other systems. Therefore, for extended application of the embodiments of the present disclosure to other systems, terms defined/described based on the 5G system may be replaced/altered with terms defined in the other systems (or generalized terms that are not specific to one system).

As an example, the PRACH and the PUCCH may be replaced with a first uplink channel and a second uplink channel.

As an example, the RAR may be replaced with a response related to the first uplink channel.

As an example, the PDCCH and the PDSCH may be replaced with a first downlink channel and a second downlink channel.

As an example, the DCI may be replaced with control information.

A device to which an embodiment of the present disclosure is applicable (a device implementing the method/operation according to an embodiment of the present disclosure) is described below with reference to FIG. 9.

FIG. 9 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 200 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1.  A method performed by a user equipment (UE) comprising:

    receiving configuration information related to candidate cells, wherein the configuration information includes a configuration related to a Physical Random Access CHannel (PRACH) for each of the candidate cells;
    receiving Downlink Control Information (DCI) that is related to an initiation of a random access procedure;
    transmitting the PRACH;
    receiving a Physical Downlink Control CHannel (PDCCH) related to a Random Access Response (RAR); and
    receiving a Physical Downlink Shared CHannel (PDSCH) related to the RAR,
    wherein the PRACH is related to a second cell different from a first cell,
    wherein a Cyclic Redundancy Check (CRC) of Downlink Control Information (DCI) related to the PDCCH is scrambled based on a Radio Network Temporary Identifier (RNTI),
    wherein the RNTI is a Random Access (RA)-RNTI which is calculated based on information related to the second cell.

2.  The method of claim 1, wherein the first cell is a serving cell and the second cell is one of the candidate cells.

3.  The method of claim 1, wherein the RA-RNTI is calculated based on a first value and a second value, and wherein the second value is calculated based on the information related to the second cell.

4.  The method of claim 3, wherein the information related to the second cell is a Physical Cell Identity (PCI) related to the second cell.

5.  The method of claim 3, wherein the information related to the second cell is a cell index configured for the Physical Cell Identity (PCI) related to the second cell.

6.  The method of claim 3, wherein the information related to the second cell is one of cell indices mapped to PCIs related to the candidate cells.

7.  The method of claim 6, wherein the cell indices are mapped in ascending order based an order of the PCIs.

8.  The method of claim 3, wherein the first value is calculated based on an index related to the PRACH, and wherein the index related to the PRACH includes at least one of i) a first index related to a symbol, ii) a second index related to a slot, iii) a third index related to a frequency domain, and/or iv) a fourth index related to an uplink carrier.

9. The method of claim 3, wherein the first value is an RA-RNTI related to the first cell.

10. The method of claim 1, wherein the information related to the second cell is an offset for a symbol index for calculating the RA-RNTI.

11. The method of claim 1, wherein the DCI includes i) a Physical Cell Identity (PCI) related to the second cell and/or ii) a cell index related to the RA-RNTI.

12. The method of claim 1, wherein the PDCCH is received based on i) a Type 1 Common Search Space (CSS) set configured in the first cell or ii) a Type 1 PDCCH CSS set configured in the second cell.

13. A user equipment comprising:

    one or more transceivers;
    one or more processors; and
    one or more memories connected to the one or more processors and storing instructions,
    wherein the instructions configure the one or more processors to perform all steps of a method according to any one of claims 1 to 12 based on being executed by the one or more processors.

14. A device comprising:

    one or more memories; and
    one or more processors operably connected to the one or more memories,
    wherein the one or more memories store instructions that configure the one or more processors to perform all steps of a method according to any one of claims 1 to 12 based on being executed by the one or more processors.

15. One or more non-transitory computer readable mediums storing instructions,
    wherein the instructions executable by one or more processors configure the one or more processors to perform all steps of a method according to any one of claims 1 to 11.

16. A method performed by a base station comprising:

    transmitting configuration information related to candidate cells, wherein the configuration information includes a configuration related to a Physical Random Access CHannel (PRACH) for each of the candidate cells;
    transmitting Downlink Control Information (DCI) that is related to an initiation of a random access procedure;
    receiving the PRACH;
    transmitting a Physical Downlink Control CHannel (PDCCH) related to a Random Access Response (RAR); and
    transmitting a Physical Downlink Shared CHannel (PDSCH) related to the RAR,
    wherein the PRACH is related to a second cell different from a first cell,
    wherein a Cyclic Redundancy Check (CRC) of Downlink Control Information (DCI) related to the PDCCH is scrambled based on a Radio Network Temporary Identifier (RNTI),
    wherein the RNTI is a Random Access (RA)-RNTI which is calculated based on information related to the second cell.

17. A base station comprising:

    one or more transceivers;
    one or more processors; and
    one or more memories connected to the one or more processors and storing instructions,
    wherein the instructions configure the one or more processors to perform all steps of a method according to claim 16 based on being executed by the one or more processors.

【FIG. 1】

| | | |
|---|---|---|
| R | Timing Advance Command | Oct 1 |
| Timing Advance Command | UL Grant | Oct 2 |
| UL Grant | | Oct 3 |
| UL Grant | | Oct 4 |
| UL Grant | | Oct 5 |
| Temporary C-RNTI | | Oct 6 |
| Temporary C-RNTI | | Oct 7 |

【FIG. 2】

| | | |
|---|---|---|
| TAG ID | Timing Advance Command | Oct 1 |

【FIG. 3】

【FIG. 4】

| C_id=0<br>Legacy RA-RNTI | C_id=0<br>Legacy MSGB-RNTI | C_id=1<br>RA-RNTI | C_id=1<br>MSGB-RNTI |
|---|---|---|---|

【FIG. 5】

| C_id=0<br>Legacy<br>RA-RNTI | C_id=0<br>Legacy<br>MSGB-RNTI | C_id=1<br>RA-RNTI | C_id=1<br>MSGB-RNTI | C_id=2<br>RA-RNTI | C_id=2<br>MSGB-RNTI | C_id=3<br>RA-RNTI | C_id=3<br>MSGB-RNTI |
|---|---|---|---|---|---|---|---|

【FIG. 6】

| Legacy<br>RA-RNTI | Legacy<br>MSGB-RNTI | C_id=0<br>RA-RNTI | C_id=1<br>RA-RNTI | C_id=2<br>RA-RNTI | C_id=0<br>MSGB-RNTI | C_id=1<br>MSGB-RNTI | C_id=2<br>MSGB-RNTI |
|---|---|---|---|---|---|---|---|

【FIG. 7】

```
            ( Start )
                |
                v
   +------------------------+
   |      Receive DCI        |----S710
   +------------------------+
                |
                v
   +------------------------+
   |     Transmit PRACH      |----S720
   +------------------------+
                |
                v
   +------------------------+
   | Receive PDCCH related   |----S730
   |        to RAR           |
   +------------------------+
                |
                v
   +------------------------+
   | Receive PDSCH related   |----S740
   |        to RAR           |
   +------------------------+
                |
                v
             ( End )
```

【FIG. 8】

```
          ┌─────────┐
          │  Start  │
          └────┬────┘
               │
               ▼
   ┌───────────────────────┐
   │     Transmit DCI       │─── S810
   └───────────┬───────────┘
               │
               ▼
   ┌───────────────────────┐
   │     Receive PRACH      │─── S820
   └───────────┬───────────┘
               │
               ▼
   ┌────────────────────────────┐
   │ Transmit PDCCH related to RAR │─── S830
   └───────────┬────────────────┘
               │
               ▼
   ┌────────────────────────────┐
   │ Transmit PDSCH related to RAR │─── S840
   └───────────┬────────────────┘
               │
               ▼
          ┌─────────┐
          │   End   │
          └─────────┘
```

【FIG. 9】

## INTERNATIONAL SEARCH REPORT

| International application No. |
| --- |
| **PCT/KR2024/004294** |

| A. | CLASSIFICATION OF SUBJECT MATTER |
| --- | --- |

**H04W 36/00**(2009.01)i; **H04W 74/00**(2009.01)i; **H04W 74/04**(2009.01)i

According to International Patent Classification (IPC) or to both national classification and IPC

| B. | FIELDS SEARCHED |
| --- | --- |

Minimum documentation searched (classification system followed by classification symbols)

H04W 36/00(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 후보 셀들(candidate cells), PRACH, DCI, 랜덤 액세스 응답(RAR), PDCCH, PDSCH, RA-RNTI

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | MODERATOR (CATT). Moderator summary on Timing advance management for LTM: Round 4. R1-2302165. 3GPP TSG RAN WG1 #112. Athens, Greece. 03 March 2023. See pages 1-24. | 1-17 |
| Y | US 2012-0300714 A1 (NG, Boon Loong et al.) 29 November 2012 (2012-11-29) See paragraphs [0065]-[0069], [0093] [0104]-[0105] and [0202]. | 1-17 |
| Y | VIVO. Discussion on multi-cell scheduling. R1-2300469, 3GPP TSG RAN WG1 #112. Athens, Greece. 17 February 2023. See page 11. | 7 |
| Y | US 2022-0210806 A1 (OFINNO, LLC) 30 June 2022 (2022-06-30) See paragraphs [0174] and [0219]. | 10 |
| A | SAMSUNG. Candidate cell TA acquisition for NR L1/L2 mobility enhancement. R1-2301288, 3GPP TSG RAN WG1 #112. Athens, Greece. 17 February 2023. See pages 1-3. | 1-17 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 July 2024** | **23 July 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/004294**

| Patent document cited in search report | | | Publication date (day/month/year) | Patent family member(s) | | | Publication date (day/month/year) |
|---|---|---|---|---|---|---|---|
| US | 2012-0300714 | A1 | 29 November 2012 | AU | 2012-254356 | A1 | 19 December 2013 |
| | | | | AU | 2012-254356 | A2 | 09 April 2015 |
| | | | | AU | 2012-254356 | B2 | 07 July 2016 |
| | | | | CN | 103597765 | A | 19 February 2014 |
| | | | | EP | 2705621 | A2 | 12 March 2014 |
| | | | | EP | 2705621 | A4 | 22 July 2015 |
| | | | | EP | 2705621 | B1 | 02 May 2018 |
| | | | | JP | 2014-518041 | A | 24 July 2014 |
| | | | | KR | 10-1969728 | B1 | 18 April 2019 |
| | | | | KR | 10-2014-0031228 | A | 12 March 2014 |
| | | | | WO | 2012-153960 | A2 | 15 November 2012 |
| | | | | WO | 2012-153960 | A3 | 24 January 2013 |
| US | 2022-0210806 | A1 | 30 June 2022 | None | | | |

Form PCT/ISA/210 (patent family annex) (July 2022)

33